(19) **Europäisches Patentamt / European Patent Office / Office européen des brevets**

(11) **EP 3 278 061 B1**

(12) **FASCICULE DE BREVET EUROPEEN**

(45) Date de publication et mention de la délivrance du brevet:
**18.09.2019 Bulletin 2019/38**

(21) Numéro de dépôt: **16715279.2**

(22) Date de dépôt: **01.04.2016**

(51) Int Cl.:
**G01C 21/16** *(2006.01)*

(86) Numéro de dépôt international:
**PCT/EP2016/057280**

(87) Numéro de publication internationale:
**WO 2016/156602 (06.10.2016 Gazette 2016/40)**

(54) **PROCÉDÉ DE SUIVI DE NAVIGATION D'UN PORTEUR MOBILE AVEC UN FILTRE DE KALMAN ÉTENDU**

VERFAHREN ZUR VERFOLGUNG DER NAVIGATION EINES MOBILEN TRÄGERS MIT EINEM ERWEITERTEN KALMAN-FILTER

METHOD FOR TRACKING THE NAVIGATION OF A MOBILE CARRIER WITH AN EXTENDED KALMAN FILTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.04.2015 FR 1500654**

(43) Date de publication de la demande:
**07.02.2018 Bulletin 2018/06**

(73) Titulaires:
- **Safran Electronics & Defense**
  **92100 Boulogne-Billancourt (FR)**
- **ASSOCIATION POUR LA RECHERCHE DEVELOPPEMENT DES METHODES ET PROCESSUS INDUSTRIELS - A.R.M.I.N.E.S.**
  **75006 Paris (FR)**

(72) Inventeurs:
- **BARRAU, Axel**
  **92100 Boulogne-Billancourt (FR)**
- **BONNABEL, Silvère**
  **75272 Paris Cedex 06 (FR)**

(74) Mandataire: **Regimbeau**
**20, rue de Chazelles**
**75847 Paris Cedex 17 (FR)**

(56) Documents cités:
**EP-A1- 1 801 539 WO-A1-2005/071431**

- **Axel Barrau ET AL: "The Invariant Extended Kalman filter as a stable observer", , 24 octobre 2014 (2014-10-24), XP055248934, Extrait de l'Internet: URL:http://arxiv.org/pdf/1410.1465v3.pdf [extrait le 2016-02-10] cité dans la demande**

**Description**

DOMAINE DE L'INVENTION

L'invention se rapporte au domaine du suivi de navigation d'un porteur mobile à partir de mesures incomplètes ou bruitées.

L'invention concerne plus particulièrement un procédé de suivi de navigation d'un porteur mobile dans lequel est mis en oeuvre un filtre Kalman étendu de type particulier.

ETAT DE LA TECHNIQUE

Un filtre de Kalman est un outil bien connu pour suivre la navigation d'un porteur tel qu'un navire, un aéronef ou un véhicule terrestre, c'est à dire sa position, sa vitesse, son accélération, etc, comme par exemple dans le document EP1801539.

Le filtre de Kalman estime au cours d'itérations successives un état de navigation du porteur via des équations matricielles, donc linéaires, au moyen de mesures bruitées fournies par des capteurs de navigation.

Le porteur est alors assimilé à un système dynamique régi par des équations linéaires, ce qui constitue une limitation contraignante.

Pour étendre le filtre de Kalman à des systèmes dynamiques régis par des équations non-linéaires, il a été proposé un procédé désigné sous l'expression de « filtre de Kalman étendu » (EKF). Cette évolution propose une étape supplémentaire consistant à linéariser, à chaque nouvelle itération du filtre, les équations régissant le système non-linéaire en un point de l'espace vectoriel, ce point étant typiquement un état estimé au cours d'une itération précédente. Les matrices issues de cette linéarisation peuvent être ainsi utilisées pour calculer un nouvel état estimé selon la méthode du filtre de Kalman classique.

Les filtres de Kalman étendus connus présentent toutefois l'inconvénient de ne pas fonctionner correctement si le point de linéarisation est trop éloigné de l'état réel de navigation du porteur.

Or, dans certains contextes de suivi de navigation, aucune estimation précise de l'état de navigation du porteur n'est disponible au démarrage du filtre, si bien que la mise en oeuvre des itérations successives du filtre de Kalman étendu ne permet pas de converger vers une estimation précise de l'état.

Pour résoudre ce problème dans le cadre particulier de l'alignement d'un porteur, il a été proposé un premier procédé, comprenant trois phases : une recherche de verticale, puis un premier alignement fournissant une estimation relativement grossière sur la base de la verticale, puis un deuxième alignement utilisant l'estimation grossière pour obtenir une estimation plus précise.

Ce procédé souffre de nombreux inconvénients : il est difficile à gérer, doit faire l'objet d'adaptation conséquentes au contexte considéré, les mouvements du porteur sont contraints pendant la phase d'alignement, et la mise en oeuvre en trois phases successives ralentit la convergence.

Aussi, la demanderesse a proposé dans la demande FR 1401512 déposée le 4 juillet 2014 un second procédé répondant au problème de linéarisation susmentionné, ce procédé proposant de mettre en oeuvre deux traitements parallèles : un traitement de base comprenant certains changements de variables permettant la mise en oeuvre d'un filtre de Kalman étendu particulier, dénommé filtre de Kalman « invariant », et un traitement simplifié estimant l'état du vrai système par un développement au premier ordre autour de l'estimation du filtre invariant. Les deux traitements fonctionnent simultanément en parallèle.

Le second procédé converge plus rapidement que le premier procédé, et les difficultés liées aux transitions rencontrées dans le cadre de mise en oeuvre du premier procédé sont supprimées.

Toutefois, les deux niveaux de traitement du second procédé sont complexes à coordonner en temps réel. L'algorithme s'insère difficilement dans une architecture prévue pour un filtre de Kalman étendu classique.

De plus, le comportement de ce second procédé dans le cas où les erreurs des senseurs (biais/facteurs d'échelles/calages) sont élevées est difficile à prévoir.

PRESENTATION GENERALE DE L'INVENTION

Un but de l'invention est d'estimer un état de navigation d'un porteur régi par un système d'équations non linéaires, au moyen d'un estimateur capable de converger même lorsque cet estimateur est configuré avec des conditions initiales éloignées de l'état de navigation réel du porteur.

Un autre but de l'invention est de proposer un procédé qui soit plus adapté à une exécution en temps-réel que les solutions de l'art antérieures présentées ci-dessus.

Il est dès lors proposé un procédé de suivi de navigation d'un porteur mobile, dans lequel un filtre de Kalman étendu estime au cours d'itérations successives un état de navigation du porteur, une itération du filtre comprenant des étapes de :

- propagation d'un état de navigation précédent du porteur en un état propagé en fonction d'un modèle cinématique et/ou de mesures acquises par au moins un capteur inertiel,
- mise à jour de l'état propagé en fonction de mesures acquises par au moins un capteur de navigation,

dans lequel, pour au moins une variable de navigation du porteur contenue dans l'état propagé, la mise à jour comprend des sous-étapes de :

- calcul d'un terme de correction linéaire à partir d'une innovation représentative d'un écart entre les mesures acquises par le capteur de navigation et l'état propagé, et
- calcul d'une exponentielle de la correction linéaire au sens d'un groupe de Lie,
- calcul d'un premier terme correctif exprimé dans un repère fixe par rapport au porteur, le premier terme correctif dépendant de ladite exponentielle,
- calcul d'un second terme correctif exprimé dans un repère inertiel dans lequel le porteur est mobile, par un changement de repère appliqué au premier terme correctif,
- ajout du second terme correctif à la valeur de la variable contenue dans l'état propagé, l'état contenant le résultat de cet ajout étant utilisé comme état de sortie de l'itération.

L'étape de mise à jour de ce procédé est non conventionnelle par rapport à celles rencontrées dans les méthodes de l'état de la technique à base de filtre de Kalman étendu. Cette étape de mise à jour modifiée définit un terme de correction dans le repère du porteur qui a pour effet de supprimer les problèmes de linéarisation évoqués précédemment. En d'autres termes, le filtre de Kalman étendu peut converger vers une estimation précise même lorsque la linéarisation est mise en oeuvre en un point trop éloigné de l'état réel du porteur.

Par ailleurs, on constate que le procédé proposé ne requiert pas l'exécution simultanée de deux traitements en parallèle ; il est par conséquent plus adapté aux contraintes temps-réel que le procédé décrit dans la demande FR 1401512, malgré une rapidité de convergence comparable.

Le procédé peut également comprendre les caractéristiques suivantes, prises seules ou en combinaison lorsque cela est techniquement possible.

La correction linéaire peut être égale à l'innovation multipliée par un gain de Kalman.

Le calcul du deuxième terme correctif peut comprendre une multiplication d'une matrice de rotation avec le premier terme correctif.

Le procédé peut comprendre en outre un ajustement d'au moins un des termes correctifs, avant son utilisation par le filtre, au moyen d'une transformation de vieillissement dudit terme correctif pendant la durée d'une itération du filtre de Kalman étendu.

L'ajustement du terme correctif comprend des sous-étapes de :

- correction supplémentaire du terme correctif d'après un écart mémorisé représentant une erreur d'approximation cumulée dans la mise en oeuvre d'une transformation de vieillissement d'au moins une itération précédente du filtre,
- application de la transformation de vieillissement au terme correctif décalé.

L'ajustement d'un premier terme correctif peut être mis en oeuvre au moyen d'une transformation comprenant un changement de base du premier terme correctif, la base de destination étant invariante par l'action d'un groupe.

L'ajustement d'un tel premier terme correctif peut comprendre une transformation du terme correctif linéaire $\varepsilon$ de la forme suivante :

$$\epsilon \rightarrow \Phi\epsilon$$

où $\Phi$ est une matrice dont au moins un bloc est calculé par la formule $Ad(X_{t+\Delta t})^{-1}\tilde{F}Ad(X_t)$, $Ad(.)$ étant une matrice d'adjoint au sens de la théorie des groupes de Lie, $\tilde{F}$ une matrice de propagation, et $\Delta t$ une durée d'itération du filtre de Kalman étendu.

$\tilde{F}$ peut présenter l'une des formes suivantes:

$$\tilde{F} = \begin{pmatrix} I_3 & 0_{3,3} & 0_{3,3} \\ \int g & I_3 & 0_{3,3} \\ \int\int g & \Delta T.I_3 & I_3 \end{pmatrix} ;$$

- ou

$$\tilde{F} = \begin{pmatrix} I_3 & 0_{3,3} \\ \int g & I_3 \end{pmatrix};$$

- $\tilde{F} = I_6$ ;
  où

- $\int g$ désigne l'intégrale du vecteur de gravité calculé en une position estimée du porteur entre les instants $t$ et $t + \Delta t$ ;
- $\int\int g$ désigne l'intégrale double du vecteur de gravité calculé en une position estimée du porteur entre les instants $t$ et $t + \Delta t$ ;
- $I_3$ désigne un bloc identité d'ordre 3,
- $0_{3,3}$ désigne un bloc carré d'ordre 3 dont les termes sont nuls.

L'étape de propagation peut par ailleurs mettre en oeuvre une équation de Riccati de la forme suivante :

$$P_{t+\Delta t} = \Phi P_t \Phi^T + \Delta t . Q$$

où $\Phi$ est une matrice dont au moins un des blocs est calculé par la formule $Ad(\hat{X}_{t+\Delta t})^{-1}\tilde{F}Ad(\hat{X}_t)$, $Ad(.)$ étant une matrice d'adjoint au sens de la théorie des groupes de Lie, $\tilde{F}$ est une matrice de propagation, et $\Delta t$ est une durée d'itération du filtre de Kalman étendu.

Les étapes du procédé peuvent être en oeuvre par une pluralité de filtres de Kalman configurés avec des conditions initiales différentes, et fonctionnant en parallèle de sorte à produire une pluralité d'estimations candidates de l'état de navigation du porteur ; dans ce cas, le procédé peut comprendre en outre la production d'une estimation consolidée de l'état de navigation du porteur à partir de la pluralité d'estimations candidates, l'estimation consolidée dépendant d'une comparaison entre chaque estimation candidate et les mesures acquises par le capteur de navigation.

Au moins un des capteurs de navigation peut être un récepteur de signaux de radionavigation émis par des satellites.

Selon un deuxième aspect, l'invention propose en outre un produit programme d'ordinateur comprenant des instructions de code de programme pour l'exécution des étapes du procédé de suivi de navigation qui précède.

Selon un troisième aspect, l'invention propose un dispositif de suivi de navigation d'un porteur mobile comprenant :

- une interface de réception de mesures acquises par au moins un capteur inertiel,
- une interface de réception de mesures secondaires acquises par au moins un capteur de navigation,
- au moins un processeur configuré pour mettre en oeuvre un filtre de Kalman étendu au cours d'itérations successives pour estimer un état de navigation du porteur, une itération du filtre comprenant des étapes de :

  ○ propagation d'un état de navigation précédent en un état propagé en fonction d'un modèle cinématique et/ou des mesures primaires,
  ○ mise à jour de l'état propagé en fonction des mesures de navigation,

le processeur étant en outre configuré pour mettre à jour au moins une variable de navigation de l'état propagé avec des sous-étapes de :
- calcul d'un terme de correction linéaire à partir d'une innovation représentative d'un écart entre les mesures acquises par le capteur de navigation et l'état propagé, et
- calcul d'une exponentielle de la correction linéaire au sens d'un groupe de Lie,
- calcul d'un premier terme correctif exprimé dans un repère fixe par rapport au porteur, le premier terme correctif dépendant de ladite exponentielle,
- calcul d'un second terme correctif exprimé dans un repère inertiel dans lequel le porteur est mobile, par un changement de repère appliqué au premier terme correctif,
- ajout du second terme correctif à la valeur de la variable dans l'état propagé, l'état contenant le résultat de cet ajout étant utilisé comme état de sortie de l'itération.

Il est également proposé une centrale de navigation pour porteur mobile, comprenant au moins un capteur inertiel, au moins un capteur de navigation, et au moins un dispositif de suivi de navigation selon le troisième aspect.

Au moins un capteur de navigation peut être un récepteur de signaux de radionavigation émis par des satellites.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement un porteur mobile, et deux repères intervenant dans des calculs mis en oeuvre par une centrale de navigation selon un mode de réalisation de l'invention,
- la figure 2 représente une centrale de navigation selon un mode de réalisation de l'invention, pour un porteur mobile,
- la figure 3 illustre les étapes d'un procédé de suivi de navigation d'un porteur mobile au moyen d'un filtre de Kalman étendu, selon un mode de réalisation de l'invention,
- la figure 4 détaille des sous-étapes d'une étape de mise à jour comprise dans le procédé de la figure 3,
- la figure 5 est un diagramme temporel illustrant des instants d'arrivées de mesures acquises et des durées de traitements opérés par une centrale de navigation.

Sur l'ensemble des figures, les éléments similaires portent des références identiques.

DESCRIPTION DETAILLEE DE L'INVENTION

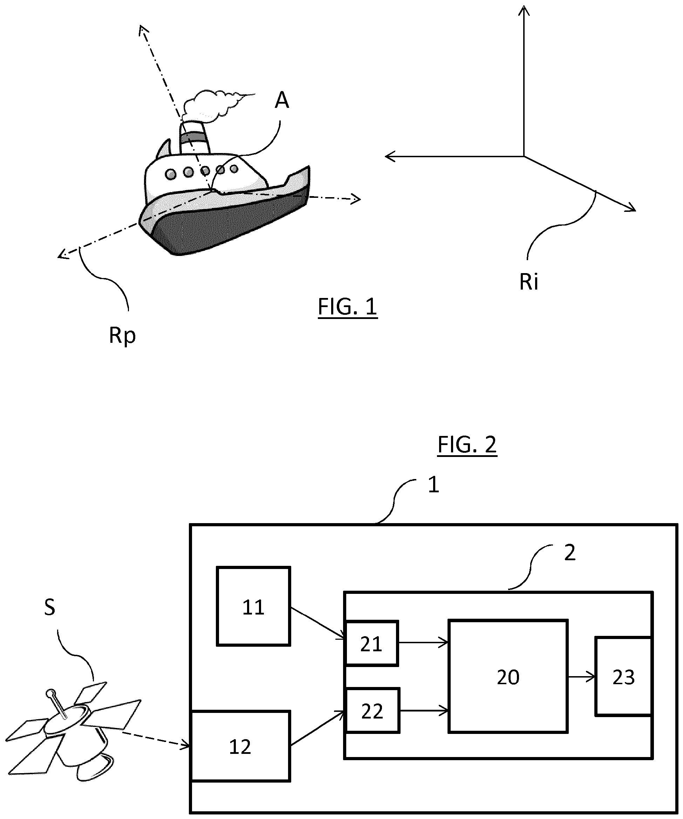

En référence à la **figure 1,** un porteur A, est mobile dans un repère inertiel Ri. Le porteur A est ici un navire mais peut alternativement être un aéronef, ou un véhicule terrestre.
Un exemple de repère inertiel Ri est le repère centré sur le centre de la Terre, dont l'axe z pointe vers le pôle nord, dont l'axe x pointe vers l'intersection du méridien de Greenwich et de l'équateur au temps t=0 (le point ainsi défini va ensuite se déplacer dans notre repère à cause de la rotation de la Terre) et dont l'axe y pointe dans la direction du vecteur $z \times x$, $\times$ désignant le produit vectoriel).
On définit un repère Rp attaché à au porteur A. Rp est appelé repère porteur ou repère de mesure dans la suite. Par exemple, les axes du repère porteur utilisés le plus fréquemment sont dirigés vers l'avant, la droite et le bas de la centrale. Son origine est un point fixe du porteur.
En référence à la **figure 2,** est embarquée sur le porteur A une centrale de navigation 1 comprenant au moins un capteur primaire 11, au moins un capteur secondaire 12, et un dispositif de suivi de navigation 2.
La centrale de navigation 1 est fixée à la structure du porteur A ; en conséquence la centrale 1 est immobile dans le repère du porteur Rp.
Dans ce qui suit, on prendra l'exemple non limitatif d'une centrale 1 de navigation hybride GNSS/inertielle.
Cette centrale 1 de navigation hybride GNSS/inertielle comprend au moins six capteurs primaires 11 de type capteur inertiel : trois accéléromètres et trois gyromètres.
Les capteurs inertiels 11 sont configurés pour acquérir des mesures dans le repère du porteur Rp.
La centrale de navigation 1 comprend par ailleurs, en guise de capteur secondaire 12, au moins un récepteur de signaux de navigation émanant de satellites S (GNSS, GPS ou équivalent).
Le dispositif de suivi de navigation 2 comprend une interface primaire 21 de réception de mesures acquises par les capteurs primaires 11, une interface secondaire 22 de réception de mesures acquises par les capteurs secondaires 12, et au moins un processeur 20 configuré pour mettre en oeuvre un filtre de Kalman étendu (généralement désigné par l'acronyme EKF dans la littérature).
Le filtre de Kalman étendu EKF est un algorithme susceptible d'être codé sous la forme d'un programme d'ordinateur exécutable par le processeur 20.
Le dispositif de suivi de navigation 2 comprend en outre une sortie 23 pour délivrer des données de sorties calculées par le processeur 20.

*Filtre de Kalman étendu*

De façon connue, un filtre de Kalman étendu EKF est un estimateur récursif d'un état représentatif de la navigation du porteur, appelé dans la suite état de navigation.
Cet état de navigation peut comprendre au moins une variable de navigation du porteur (position, vitesse, accélération, orientation, etc.). L'état de navigation peut en tout état de cause être représenté sous la forme d'un vecteur dont chaque composante est une variable de navigation du porteur.
On considère dans la suite un mode de réalisation dans lequel l'état de navigation comprend les variables de navigation suivantes:

- un vecteur position *x* du porteur de dimension 3,
- un vecteur vitesse *v* du P de dimension 3,

- Une matrice d'orientation *R* du porteur, définie comme la matrice de rotation permettant le changement de repère depuis le repère porteur Rp vers le repère inertiel Ri.

L'état comprend par ailleurs N variables supplémentaires qui peuvent être par exemple des perturbations des mesures des senseurs :

- un vecteur de dimension 3 contenant les dérives des gyromètres dans le repère du porteur Rp,
- un vecteur de dimension 3 contenant les biais des accéléromètres dans le repère du porteur Rp,
- un vecteur de dimension 9 contenant des facteurs d'échelles et des erreurs de calage des gyromètres,
- un vecteur de dimension 9 contenant des facteurs d'échelles et des erreurs de calage des accéléromètres.

On a dans ce cas N=24. Les variables supplémentaires sont rassemblées dans un vecteur de taille N et noté b.

Les grandeurs estimées seront dans la suite notées avec des chapeaux $(\hat{x}, \hat{v}, \hat{R}, \hat{b})$ et les grandeurs réelles sans chapeaux $(x, v, R, b)$.

Le filtre de Kalman étendu EKF est configuré avec un modèle cinématique du porteur A. Ce modèle est typiquement représentable par une fonction de propagation non linéaire. Cette fonction de propagation modélise l'évolution des variables de navigation de l'état de navigation du porteur entre deux instants.

Le filtre de Kalman EKF est en outre configuré avec un modèle d'observation, ou fonction d'observation, qui modélise le comportement des capteurs secondaires utilisés (ici le ou chaque récepteur GNSS). La fonction d'observation permet notamment de tenir compte d'erreurs de mesure commise par les capteurs secondaires. La fonction d'observation peut être non-linéaire.

Le filtre de Kalman étendu est mis en oeuvre par itérations successives.

Le filtre est initialisé avec un état initial, qui servira d'entrée pour une première itération du filtre. Chaque itération suivante du filtre prend en entrée un état estimé par une itération précédente du filtre, et fournit une nouvelle estimation de l'état du porteur.

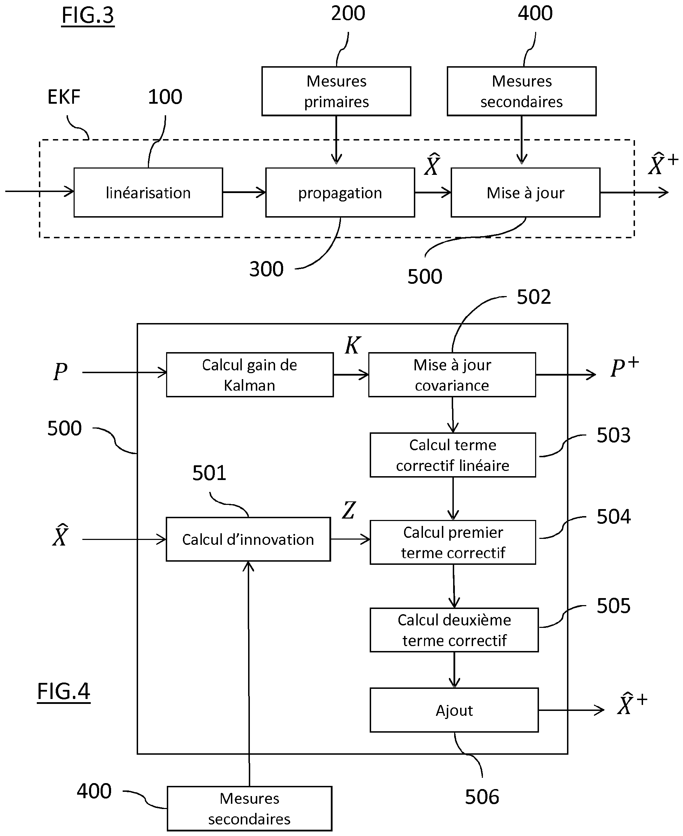

En référence à la **figure 3,** une itération du filtre de Kalman étendu comprend classiquement trois étapes : une linéarisation 100, une propagation 300, et une mise à jour 500.

L'étape de linéarisation 100 est mise en oeuvre conformément à la description qui en est donnée en introduction. On rappelle ici que cette étape 100 utilise un état précédent comme point de linéarisation, de sorte à approximer les fonctions de propagation et d'observation par des fonctions linéaires. Ces fonctions linéaires sont ensuite utilisées au cours des étapes de propagation 300 et de mise à jour 500.

L'étape de propagation 300 détermine un état propagé $\hat{X}$ du porteur à partir de l'état précédent du porteur (ou l'état initial pour la première itération), et ce au moyen de la fonction de propagation linéarisée.

L'étape de propagation 300 produit en outre une matrice de covariance P représentative d'une incertitude sur les mesures acquises.

La propagation 300 met en oeuvre une équation de Riccati de la forme suivante :

$$P_{t+\Delta T} = \Phi P_t \Phi^T + \Delta T . Q$$

où *Q* est la matrice de covariance du bruit de modèle définie par l'incertitude de mesure des différents capteurs, Δ*t* est une durée d'itération du filtre de Kalman étendu, et Φ est la solution en *t* + Δ*t* d'une équation différentielle de la forme

$\Phi_t = Id,$ $\dfrac{d}{ds}\Phi_s = F_s\Phi_s$ , $F_s$ étant la matrice de propagation des erreurs de premier ordre, toutes les erreurs des variables de mouvement étant projetées dans le repère attaché à l'état estimé du porteur. Ici on a :

$$\frac{d}{dt}\begin{pmatrix} \xi \\ \hat{R}^T(v - \hat{v}) \\ \hat{R}^T(x - \hat{x}) \\ b - \hat{b} \end{pmatrix} \approx F_s \begin{pmatrix} \xi \\ \hat{R}^T(v - \hat{v}) \\ \hat{R}^T(x - \hat{x}) \\ b - \hat{b} \end{pmatrix}$$

Où $\xi$ est défini au premier ordre par $\hat{R}^T R \approx A(\xi)$ avec :

$$A \begin{pmatrix} u_1 \\ u_2 \\ u_3 \end{pmatrix} = \begin{pmatrix} 0 & -u_3 & u_2 \\ u_3 & 0 & -u_1 \\ -u_2 & u_1 & 0 \end{pmatrix}$$

L'équation de Riccati peut aussi prendre la forme plus classique entre $t$ et $t + \Delta t$ :

$$\frac{d}{dt} P = F_t P + P F_t^T + Q$$

Dans une forme optimisée des calculs, l'un des blocs de $\Phi$ est calculé sans recourir à une équation différentielle, par la formule : $\Phi = Ad(\hat{X}_{t+\Delta t})^{-1} \tilde{F} Ad(\hat{X}_t)$, où $\hat{X}_t$ est la valeur estimée des variables de mouvement, $Ad(.)$ est une matrice d'adjoint au sens de la théorie des groupes de Lie et $\tilde{F}$ une matrice de propagation.

Selon une première variante, la matrice $\tilde{F}$ a la forme suivante :

$$\tilde{F} = \begin{pmatrix} I_3 & 0_{3,3} & 0_{3,3} \\ \int g & I_3 & 0_{3,3} \\ \int\int g & \Delta t. I_3 & I_3 \end{pmatrix}$$

Selon une deuxième variante, $\tilde{F}$ a la forme suivante :

$$\tilde{F} = \begin{pmatrix} I_3 & 0_{3,3} \\ \int g & I_3 \end{pmatrix}$$

Selon une troisième variante, $\tilde{F}$ a la forme suivante :

$$\tilde{F} = I_6$$

Les équations de propagation peuvent faire intervenir les mesures primaires acquises 200 par les capteurs primaires 11.

Des mesures secondaires $Y_{GPS}$ sont mesurées par les capteurs secondaires 12 dans l'étape 400, ces mesures étant exprimées dans le repère du porteur Rp. Les mesures $Y_{GPS}$ sont reçues par l'interface secondaire 22 qui les transmet au processeur 20 en vue d'être traitées.

Dans l'étape de mise à jour 500, le processeur 20 corrige l'état propagé $\hat{X}$ produit par l'étape de propagation 300, au moyen de la fonction d'observation linéarisée et en utilisant les mesures secondaires fournies par les capteurs secondaires 12 dans l'étape 400. L'état mis à jour produit par cette étape 500 est appelé dans la suite $\hat{X}^+$.

L'état mis à jour $\hat{X}^+$ est fourni sur la sortie 23.

On remarque que, dans la mise en oeuvre du filtre de Kalman étendu ici considéré, deux types de mesure interviennent respectivement aux étapes de propagation 300 et de mise à jour 500 (les mesures fournies par les capteurs primaires 11 et secondaires 12).

Ce fonctionnement est typique d'une centrale hybride, dans laquelle on utilise les mesures secondaires pour consolider les mesures primaires. Il est néanmoins possible de prévoir que l'étape de propagation n'utilise pas de mesures, mais seulement un modèle cinématique pour propager l'état précédent en l'état propagé $\hat{X}$. Dans ce cas, seules les mesures fournies par les capteurs secondaires 12 sont utilisées par le filtre de Kalman étendu au cours de la mise à jour 500.

Les étapes 100 à 500 sont ensuite répétées lors de chaque itération du filtre de Kalman étendu exécuté par le processeur 20.

Dans un mode de réalisation, le processeur 20 exécute plusieurs filtres de Kalman étendus en parallèle, qui utilisent les mêmes mesures primaires et secondaires.

Toutefois, les différents filtres de Kalman étendus fonctionnant en parallèle sont initialisés avec des conditions initiales différentes (ces conditions initiales sont en l'occurrence les valeurs de variable choisies dans l'état qui sert de point de linéarisation au cours de l'étape de linéarisation de la première itération de chaque filtre).

Chaque filtre de Kalman fournit donc une estimation candidate de l'état du porteur distincte.

Peut alors être mise en oeuvre une étape de consolidation produisant une estimation consolidée de l'état de navigation du porteur à partir des estimations candidates, l'estimation consolidée dépendant d'une comparaison entre chaque estimation candidate et les mesures acquises par le capteur secondaire.

L'étape de consolidation peut, par exemple, sélectionner l'une des estimations candidates en guise d'estimation consolidée. En variante, plusieurs estimations candidates sont combinées par calcul pour produire l'estimation consolidée.

On va maintenant détailler plus précisément des sous-étapes de l'étape de mise à jour 500, en référence à la **figure 3.**

Le processeur 20 calcule dans une étape 501 une innovation Z représentative d'un écart entre les mesures $Y_{GPS}$ acquises par les capteurs secondaires 12 et l'état propagé $\hat{X}$.

L'innovation est calculée dans le repère du porteur. Si la mesure secondaire est une position, l'innovation est typiquement calculée au moyen de la formule suivante :

$$Z = \hat{R}^T (Y_{GPS} - \hat{X})$$

Le processeur 20 calcule par ailleurs un gain K au sens de Kalman au moyen des équations suivantes :

$$S = HPH^T + \Sigma$$

$$K = PH^T S^{-1}$$

Dans les équations ci-dessus, $\Sigma$ est la matrice de covariance supposée du bruit de mesure des capteurs secondaires dans le référentiel du porteur (elle peut dépendre de l'état estimé) et $H$ est définie par un développement au premier ordre où toutes les erreurs concernant les grandeurs de mouvement sont exprimées dans le repère du porteur :

$$\hat{R}^T x \approx \hat{R}^T \hat{x} + H \begin{pmatrix} \xi \\ \hat{R}^T (v - \hat{v}) \\ \hat{R}^T (x - \hat{x}) \\ b - \hat{b} \end{pmatrix}$$

Dans le cas d'observations de position issues d'un récepteur GPS on aura $H = (0_{3,6} \ I_3 \ 0_{3,N})$

La covariance P produite par l'étape de propagation est par ailleurs mise à jour 502 de façon conventionnelle, de la façon suivante :

$$P^+ = (Id - KH)P$$

Par convention, la notation « + » fait dans le présent document au données de sortie de la mise à jour 500 ; $P^+$ désigne donc ici la covariance produite par la mise à jour.

Dans une étape 503, une correction linéaire est calculée en fonction du gain de Kalman K et de l'innovation Z.

La correction linéaire est égale à l'innovation multipliée par un gain de Kalman, comme l'exprime la formule ci-dessous :

$$\begin{pmatrix} dX \\ db \end{pmatrix} = K.Z$$

La correction linaire, qui est le terme de gauche dans l'équation ci-dessus, est constituée d'un vecteur dX correspondant aux variables de mouvement (position, vitesse, attitude par exemple) et d'un vecteur db correspondant aux autres variables, chacun en relation avec des variables de l'état propagé $\hat{X}$.

Pour au moins une des variables de l'état propagé $\hat{X}$ concernées par le vecteur dX, le processeur 20 calcule 504 un premier terme correctif exprimé dans le repère porteur Rp fixe par rapport au porteur.

On calcule par exemple:

- un premier terme correctif $e_R$ se rapportant à la matrice d'orientation $\hat{R}$;
- un premier terme correctif $e_v$ se rapportant au vecteur vitesse $\hat{v}$ ;
- un premier terme correctif $e_x$ se rapportant au vecteur position $\hat{x}$.

Chaque premier terme correctif dépend de l'exponentielle au sens des groupes de Lie de la correction linéaire.
L'ensemble des premiers termes correctifs résulte par exemple du calcul matriciel suivant :

$$\begin{pmatrix} e_R & e_v & e_x \\ 0_{1,3} & 1 & 0 \\ 0_{1,3} & 0 & 1 \end{pmatrix} = exp \begin{pmatrix} 0 & -x_3 & x_2 & x_4 & x_7 \\ x_3 & 0 & -x_1 & x_5 & x_8 \\ -x_2 & x_1 & 0 & x_6 & x_9 \\ 0 & 0 & 0 & 0 & 0 \\ 0 & 0 & 0 & 0 & 0 \end{pmatrix}$$

Dans cette équation matricielle,

- la matrice de gauche comprend les premiers termes correctifs, les termes $x_i$ sont les composantes du sous vecteur dX (qui est ici de dimension 9 car se réfère au vecteur position de dimension 3, au vecteur vitesse de dimension 3 et la matrice d'orientation) ;
- l'opérateur « exp » désigne soit une exponentielle de matrice calculée de façon exacte, soit une exponentielle de matrice approchée d'ordre n>1, c'est-à-dire que seuls les n premiers termes de la série $1 + \frac{M}{1!} + \frac{M^2}{2!} + \frac{M^3}{3!} + ,$ définissant l'exponentielle d'une matrice M sont calculés. De préférence, l'ordre n est supérieur à 2.

Le processeur 20 procède ensuite au calcul 505 d'un second terme correctif exprimé dans le repère inertiel Ri dans lequel le porteur est mobile, par un changement de repère appliqué à un premier terme correctif correspondant, qui lui est exprimé dans le repère du porteur Rp.
Trois termes correctifs $\delta R$, $\delta v$, $\delta x$ sont obtenus par ce calcul.

- un second terme correctif $\delta R$ se rapportant à la matrice d'orientation $\hat{R}$;
- un second terme correctif $\delta v$ se rapportant au vecteur vitesse $\hat{v}$ ;
- un second terme correctif $\delta x$ se rapportant au vecteur position $\hat{x}$.

Le calcul des seconds termes correctifs est par exemple le suivant :

$$\delta R = e_R$$

$$\delta v = \hat{R}. e_v$$

$$\delta x = \hat{R}. e_x$$

On constate ici que les premiers termes correctifs $e_v$ et $e_x$, qui concernent respectivement la vitesse et la position du porteur, sont multipliés à gauche par la matrice $\hat{R}$ de changement de repère.
Pour chaque second terme correctif, le processeur ajoute 506 le second terme correctif calculé à la valeur de la variable contenue dans l'état propagé, comme suit:

$$\hat{R}^+ = \hat{R}. \delta R$$

$$\hat{v}^+ = \hat{v} + \delta v$$

$$\hat{x}^+ = \hat{x} + \delta x$$

Les variables supplémentaires sont mises à jour de façon classique :

$$\hat{b}^+ = \hat{b} + db$$

En définitive, l'étape de mise à jour dont les sous étapes viennent d'être détaillées transforme un état propagé $\hat{X}$ contenant les variables $\hat{R}$, $\hat{v}$, $\hat{x}$ et $\hat{b}$ en un état mis à jour $\hat{X}^+$ contenant des variables mises à jour $\hat{R}^+$, $\hat{v}^+$, $\hat{x}^+$ et $\hat{b}^+$ en tenant compte des mesures secondaires (ici de type GNSS) fournies par les capteurs secondaires 12.

Dans l'étape de mise à jour 500 qui vient d'être décrite, on constate que la correction linéaire n'est pas directement ajoutée dans l'étape 506 à l'état propagé $\hat{X}$.

Premièrement, les (seconds) termes correctifs qui sont utilisés pour l'ajout 50 sont exprimés dans le repère inertiel Ri (après application de l'étape 504), ce qui permet de bénéficier d'avantages similaires à ceux obtenus par utilisation d'un filtre de Kalman invariant, tel que défini dans l'article « *The invariant extended Kalman filter as a stable observer, A. Barrau et S. Bonnabel, Arxiv preprint, arXiv : 1410.1465* ». Cependant, le changement de repère est ici mis en oeuvre directement au cours de l'étape de mise à jour 500 du filtre de Kalman étendu; ce changement est donc plus facile à implémenter dans une centrale de navigation existante, et fonctionnant en temps réel.

Deuxièmement, les (seconds) termes correctifs utilisés pour la mise à jour additive réalisée dans l'étape 506 sont issus d'une étape de transformation exponentielle (l'étape 504), qui a pour effet d'accélérer la convergence du filtre de Kalman étendu.

*Vieillissement de données utilisées par le filtre de Kalman*

Dans la centrale de navigation 1 fonctionnant à base de capteurs primaires 11 et capteurs secondaires 12, les capteurs primaires 11 et les capteurs secondaires 12 ne fonctionnent pas forcément à la même cadence, si bien que la période moyenne de réception de mesures acquises par les capteurs primaires 11 peut être différente de la période moyenne de réception de mesures acquises par les capteurs secondaires 12.

Par exemple, il est classique qu'une centrale hybride inertielle/GNSS fonctionne avec une période moyenne de réception de mesures GNS fournies par le récepteur GNSS 12 égale à 3,84 secondes, et à la période moyenne de réception d'incréments inertiels fournis par les capteurs inertiels bien plus faible (la fréquence d'arrivée des incréments inertiels est en d'autres termes beaucoup plus rapide que la fréquence d'arrivée des mesures GNSS).

Le filtre de Kalman étendu est classiquement configuré pour déclencher ses calculs de mise à jour 500 suivant la cadence d'arrivée des mesures secondaires GNSS.

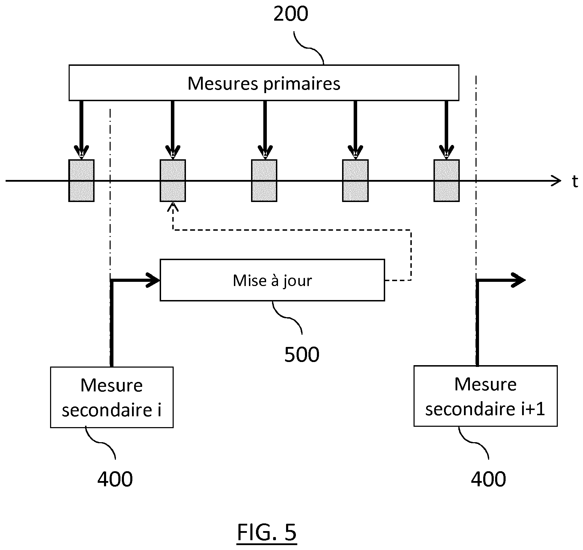

Ce phénomène est illustré sur la **figure 5.** Sur cette figure, chaque carré représente de façon schématique le traitement de nouveaux incréments inertiels $\Delta v$, $\Delta \theta$ fournis par les capteurs primaires de type inertiels 11.

Dans un système idéal dans lequel les calculs de mise à jour 500 seraient instantanés, c'est-à-dire de durée nulle, l'état mis à jour $\hat{X}^+$ serait disponible dès l'instant t d'arrivée des incréments inertiels suivant immédiatement l'instant d'arrivée des mesures GNSS qui ont servi pour les calculs de mise à jour (cette disponibilité idéale étant représentée par la flèche en pointillés sur la figure 4).

Or, les calculs de mise à jour 500 durent en pratique une durée non négligeable. En conséquence, les mesures primaires inertielles peuvent avoir fait évoluer l'état estimé pendant le déroulement des calculs de mise à jour 500, si bien que le résultat de la mise à jour 500 est en pratique obsolète par rapport à l'estimation propagée.

Pour contourner ce problème d'obsolescence, et ainsi améliorer la précision des estimations calculées par le filtre de Kalman étendu, il est possible d'ajuster la valeur de certains des termes correctifs qui interviennent dans les calculs de la mise à jour 500, cet ajustement ayant pour fonction de simuler l'évolution, ou vieillissement de ces termes correctif pendant la durée des calculs de mise à jour 500.

Par convention, on appelle « transformation de vieillissement » une transformation convertissant un terme correctif en un terme correctif ajusté pendant la durée $\Delta t$ d'une itération du filtre de Kalman étendu (c'est-à-dire la durée qui sépare le déclenchement de la mise à jour d'une itération donnée, et le déclenchement de la mise à jour de l'itération subséquente).

Une première transformation de vieillissement peut être appliquée par exemple à au moins un des premiers termes correctifs $e_R$, $e_v$, $e_x$ (c'est-à-dire les termes correctifs résultant du calcul exponentiel réalisé sur la base de la correction linéaire dépendant de l'innovation Z).

La première transformation d'un premier terme correctif comprend de préférence un changement de base du premier terme correctif considéré, la base de destination de ce changement étant choisie invariante par l'action d'un groupe. Un tel groupe est par exemple décrit dans le document « The invariant extended Kalman filter as a stable observer, A. Barrau et S. Bonnabel, Arxiv preprint, arXiv :1410.1465 *».*

Un tel changement de base est particulièrement avantageux car permet d'accélérer de façon significative le traitement de vieillissement.

L'ajustement peut ainsi comprendre les calculs suivants:

$$\begin{pmatrix} \tilde{e}_R & \tilde{e}_v & \tilde{e}_x \\ 0_{1,3} & 1 & 0 \\ 0_{1,3} & 0 & 1 \end{pmatrix} = \begin{pmatrix} \hat{R}_t & \hat{v}_t & \hat{x}_t \\ 0_{1,3} & 1 & 0 \\ 0_{1,3} & 0 & 1 \end{pmatrix} e_1 \begin{pmatrix} \hat{R}_t & \hat{v}_t & \hat{x}_t \\ 0_{1,3} & 1 & 0 \\ 0_{1,3} & 0 & 1 \end{pmatrix}^{-1}$$

$$\bar{e}_R = \tilde{e}_R$$

$$\bar{e}_x = \tilde{e}_x + \Delta T. \tilde{e}_v + \int \int g$$

$$\bar{e}_v = \tilde{e}_v + \int g$$

$$\bar{e} = \begin{pmatrix} \bar{e}_R & \bar{e}_v & \bar{e}_x \\ 0_{1,3} & 1 & 0 \\ 0_{1,3} & 0 & 1 \end{pmatrix}$$

$$\begin{pmatrix} e'_R & e'_v & e'_x \\ 0_{1,3} & 1 & 0 \\ 0_{1,3} & 0 & 1 \end{pmatrix} = \begin{pmatrix} \hat{R}_{t+\Delta t} & \hat{v}_{t+\Delta t} & \hat{x}_{t+\Delta t} \\ 0_{1,3} & 1 & 0 \\ 0_{1,3} & 0 & 1 \end{pmatrix} \bar{e} \begin{pmatrix} \hat{R}_{t+\Delta t} & \hat{v}_{t+\Delta t} & \hat{x}_t \\ 0_{1,3} & 1 & 0 \\ 0_{1,3} & 0 & 1 \end{pmatrix}^{-1}$$

Dans ces équations,

- $\int g$ désigne l'intégrale du vecteur de gravité calculé en une position estimée du porteur entre les instants $t$ et $t + \Delta t$,
- $\int \int g$ désigne l'intégrale double du vecteur de gravité calculé sur la position estimée entre les instants $t$ et $t + \Delta t$.
- $e'_R, \ e'_v, \ e'_x$ sont des premiers termes ajustés,
- $I_n$ désigne un bloc identité d'ordre n, et
- $0_{n,n}$ désigne un bloc carré d'ordre n dont les termes sont nuls.

Les premiers termes correctifs ajustés $e'_R, \ e'_v, \ e'_x$ sont utilisés comme données d'entrée à l'étape 505 produisant les seconds termes correctifs par changement de repère.

Une transformation de vieillissement peut alternativement (ou en complément) être appliquée à au moins un terme correctif linéaire résultant de la multiplication de l'innovation Z et du gain de Kalman K.

La transformation de vieillissement appliqué à un terme correctif linéaire $\varepsilon$ peut être de la forme suivante :

$$\epsilon \to \Phi\epsilon$$

Où $\Phi$ est défini comme précédemment. La même astuce faisant intervenir des matrices $\Phi^{bd}$, $Ad(\hat{X}_t)$, $Ad(\hat{X}_{t+\Delta t})$ et $\tilde{F}$ peut aussi être utilisée.

Deux traitements de vieillissements successifs mis en oeuvre au cours de deux itérations successives du filtre de Kalman peuvent, dans un mode de réalisation, être indépendants l'un de l'autre.

Toutefois, dans un autre mode de réalisation, un traitement de vieillissement mis en oeuvre au cours d'une itération donnée du filtre de Kalman sur un terme correctif dépend de vieillissements précédents concernant le même terme correctif. Dans ce cas, le processeur a au cours d'une itération précédente :

- appliqué une transformation de vieillissement approximative au terme correctif considéré,
- calculé un écart représentant une erreur d'approximation dans la mise en oeuvre de cette transformation de vieillissement approximative,
- mémorisé cet écart.

On comprend que ce principe est généralisable à N itérations précédentes: il peut être ainsi mémorisé un écart représentant une erreur d'approximation cumulée dans la mise en oeuvre d'une transformation de vieillissement de ces N itération précédentes du filtre de Kalman étendu.

A l'itération courante (qui suit les N itérations précédentes), est appliqué encore une transformation de vieillissement approximative au terme correctif à ajuster.

Toutefois, ce terme correctif fait l'objet d'une correction supplémentaire tenant compte de l'écart cumulé mémorisé au cours des N itérations précédentes.

Le calcul de l'écart entre le terme correctif vieilli et son approximation peut prendre la forme d'une différence au sens d'une loi de groupe, d'une différence vectorielle, ou d'une différence vectorielle corrigée par des termes supplémentaires issus de la formule de Baker-Campbell-Hausdorff.

Un tel mode de réalisation donne une certaine souplesse d'implémentation de l'étape d'ajustement, laquelle vise à vieillir un terme correctif intervenant dans les calculs de mise à jour du filtre de Kalman étendu.

En effet, il se peut que le traitement de vieillissement théoriquement optimal ne puisse être conduit immédiatement. On préfère alors mettre en oeuvre un traitement de vieillissement approximatif, donc moins précis, mais ce sans délai, tout en mémorisant l'erreur induite par cette approximation en vue d'être utilisée ultérieurement.

*Vieillissement des mesures secondaires*

Dans certaines architectures de centrales de navigation hybrides, l'instant de démarrage des calculs de mises à jour peuvent être contraints de sorte qu'il peut exister un retard significatif entre l'instant auquel est réceptionnée une nouvelle mesure secondaire (par exemple GNSS dans le cas de centrales hybrides inertielles/GNSS) et l'instant auquel les calculs de mise à jour utilisant cette nouvelle mesure sont effectivement démarrés (ce phénomène étant également illustré sur la **figure 4).**

Les mesures secondaires fournies sont donc dans ce cas déjà obsolètes à l'instant même où les calculs de mise à jour sont démarrés.

Cette obsolescence peut être corrigée par un traitement de vieillissement appliqué à la dernière mesure secondaire Y obtenue.

Selon une première variante, le traitement de vieillissement appliqué à la dernière mesure secondaire reçue comprend une extrapolation temporelle de la dernière mesure secondaire reçue à l'instant ultérieur de démarrage des calculs de mise à jour.

Cette extrapolation peut dépendre de précédente(s) mesure(s) secondaire(s) et/ou d'au moins un état précédemment estimé par le filtre de Kalman étendu.

Selon une deuxième variante, le traitement de vieillissement appliqué à la dernière mesure secondaire reçue comprend une modification de la fonction d'observation mise en oeuvre pour mettre à jour la matrice de covariance P.

**Revendications**

1. Procédé de suivi de navigation d'un porteur mobile, dans lequel un filtre de Kalman étendu (EKF) estime au cours d'itérations successives un état de navigation du porteur, une itération du filtre (EKF) comprenant des étapes de :

   • propagation (300) d'un état de navigation précédent du porteur en un état propagé en fonction d'un modèle cinématique et/ou de mesures acquises par au moins un capteur inertiel (11),
   • mise à jour (500) de l'état propagé en fonction de mesures acquises par au moins un capteur de navigation (12),

   le procédé étant **caractérisé en ce que**, pour au moins une variable de navigation du porteur contenue dans l'état propagé, la mise à jour (500) comprend des sous-étapes de :

   • calcul (503) d'un terme de correction linéaire à partir d'une innovation représentative d'un écart entre les mesures acquises par le capteur de navigation (12) et l'état propagé,
   • calcul d'une exponentielle de la correction linéaire au sens d'un groupe de Lie,

• calcul (504) d'un premier terme correctif exprimé dans un repère (Rp) fixe par rapport au porteur, le premier terme correctif dépendant de ladite exponentielle,

• calcul (505) d'un second terme correctif exprimé dans un repère inertiel (Ri) dans lequel le porteur est mobile, par un changement de repère appliqué au premier terme correctif,

• ajout (506) du second terme correctif à la valeur de la variable contenue dans l'état propagé, l'état contenant le résultat de cet ajout étant utilisé comme état de sortie de l'itération.

**2.** Procédé selon la revendication précédente, dans lequel la correction linéaire est égale à l'innovation multipliée par un gain de Kalman.

**3.** Procédé selon l'une des revendications précédentes, dans lequel le calcul (505) du deuxième terme correctif comprend une multiplication d'une matrice de rotation avec le premier terme correctif.

**4.** Procédé selon l'une des revendications précédentes, comprenant un ajustement d'au moins un des termes correctifs, avant son utilisation par le filtre, au moyen d'une transformation de vieillissement dudit terme correctif pendant la durée d'une itération du filtre de Kalman étendu.

**5.** Procédé selon la revendication précédente, dans lequel l'ajustement du terme correctif comprend des sous-étapes de :

• correction supplémentaire du terme correctif d'après un écart mémorisé représentant une erreur d'approximation cumulée dans la mise en oeuvre d'une transformation de vieillissement d'au moins une itération précédente du filtre,

• application de la transformation de vieillissement au terme correctif décalé.

**6.** Procédé selon l'une des revendications 4 et 5, dans lequel l'ajustement du premier terme correctif est mis en oeuvre au moyen d'une transformation comprenant un changement de base du premier terme correctif, la base de destination étant invariante par l'action d'un groupe.

**7.** Procédé selon l'une des revendications 4 à 6, dans lequel l'ajustement comprend une transformation du terme correctif linéaire $\varepsilon$ de la forme suivante :

$$\epsilon \rightarrow \Phi\epsilon$$

où $\Phi$ est une matrice dont au moins un bloc est calculé par la formule $Ad(X_{t+\Delta t})^{-1}\tilde{F}Ad(X_t)$, $Ad(.)$ étant une matrice d'adjoint au sens de la théorie des groupes de Lie, $\tilde{F}$ est une matrice de propagation, et $\Delta t$ une durée d'itération du filtre de Kalman étendu.

**8.** Procédé selon la revendication précédente, dans lequel $\tilde{F}$ présente l'une des formes suivantes:

$$\tilde{F} = \begin{pmatrix} I_3 & 0_{3,3} & 0_{3,3} \\ \int g & I_3 & 0_{3,3} \\ \int\int g & \Delta T.I_3 & I_3 \end{pmatrix} ; \text{ ou}$$

$$\tilde{F} = \begin{pmatrix} I_3 & 0_{3,3} \\ \int g & I_3 \end{pmatrix}; \text{ ou}$$

• $\tilde{F} = I_6$ ;

où:

• $\int g$ désigne l'intégrale du vecteur de gravité calculé en une position estimée du porteur entre les instants $t$ et $t + \Delta t$ ;

• $\int\int g$ désigne l'intégrale double du vecteur de gravité calculé en une position estimée du porteur entre les instants $t$ et $t + \Delta t$ ;

• $I_3$ désigne un bloc identité d'ordre 3,

• $0_{3,3}$ désigne un bloc carré d'ordre 3 dont les termes sont nuls.

9. Procédé selon l'une des revendications précédentes, dans laquelle la propagation met en oeuvre une équation de Riccati de la forme suivante :

$$P_{t+\Delta T} = \Phi P_t \Phi^T + \Delta T . Q$$

où $\Phi$ est une matrice dont au moins un des blocs est calculé par la formule $Ad(\hat{X}_{t+\Delta t})^{-1}\tilde{F}Ad(\hat{X}_t)$, $Ad(.)$ étant une matrice d'adjoint au sens de la théorie des groupes de Lie, $\tilde{F}$ est une matrice de propagation, et $\Delta t$ est une durée d'itération du filtre de Kalman étendu.

10. Procédé selon l'une des revendications précédentes,

   • dont les étapes sont mises en oeuvre par une pluralité de filtres de Kalman configurés avec des conditions initiales différentes, et fonctionnant en parallèle de sorte à produire une pluralité d'estimations candidates de l'état de navigation du porteur,
   • comprenant en outre la production d'une estimation consolidée de l'état de navigation du porteur à partir de la pluralité d'estimations candidates, l'estimation consolidée dépendant d'une comparaison entre chaque estimation candidate et les mesures acquises par le capteur de navigation (12).

11. Procédé selon l'une des revendications précédentes, dans lequel au moins un capteur de navigation (12) est un récepteur de signaux de radionavigation émis par des satellites.

12. Produit programme d'ordinateur comprenant des instructions de code de programme pour l'exécution des étapes du procédé selon l'une des revendications précédentes, lorsque ce programme est exécuté par un ordinateur.

13. Dispositif (2) de suivi de navigation d'un porteur mobile comprenant :

   • une interface (21) de réception de mesures acquises par au moins un capteur inertiel (11),
   • une interface (22) de réception de mesures secondaires acquises par au moins un capteur de navigation (12),
   • au moins un processeur (20) configuré pour mettre en oeuvre un filtre de Kalman étendu au cours d'itérations successives pour estimer un état de navigation du porteur, une itération du filtre comprenant des étapes de :

      ∘ propagation d'un état de navigation précédent en un état propagé en fonction d'un modèle cinématique et/ou des mesures primaires,
      ∘ mise à jour de l'état propagé en fonction des mesures de navigation,

   le dispositif (2) étant **caractérisé en ce que** le processeur (20) est en outre configuré pour mettre à jour au moins une variable de navigation de l'état propagé avec des sous-étapes de :

   • calcul (503) d'un terme de correction linéaire à partir d'une innovation représentative d'un écart entre les mesures acquises par le capteur de navigation (12) et l'état propagé,
   • calcul d'une exponentielle de la correction linéaire au sens d'un groupe de Lie,
   • calcul d'un premier terme correctif exprimé dans un repère fixe par rapport au porteur, le premier terme correctif dépendant de ladite exponentielle,
   • calcul d'un second terme correctif exprimé dans un repère inertiel dans lequel le porteur est mobile, par un changement de repère appliqué au premier terme correctif,
   • ajout du second terme correctif à la valeur de la variable dans l'état propagé, l'état contenant le résultat de cet ajout étant utilisé comme état de sortie de l'itération.

14. Centrale de navigation (1) pour porteur mobile, comprenant :

   • au moins un capteur inertiel (11),
   • au moins un capteur de navigation (12), et
   • au moins un dispositif (10) de suivi de navigation selon la revendication précédente.

15. Centrale de navigation (1) selon la revendication précédente, dans laquelle au moins un capteur de navigation (12) est un récepteur de signaux de radionavigation émis par des satellites.

**Patentansprüche**

1. Verfahren zur Verfolgung der Navigation eines mobilen Trägers, wobei ein erweiterter Kalman-Filter (EKF) im Laufe von aufeinanderfolgenden Iterationen einen Navigationszustand des Trägers einschätzt, wobei eine Iteration des Filters (EKF) folgende Schritte umfasst:

   • Verbreiten (300) eines vorherigen Navigationszustands des Trägers in einen verbreiteten Zustand in Abhängigkeit von einem kinematischen Modell und/oder von durch mindestens einen Trägheitssensor (11) erfassten Messungen,
   • Aktualisieren (500) des verbreiteten Zustands in Abhängigkeit von durch mindestens einen Navigationssensor (12) erfassten Messungen,

   wobei das Verfahren **dadurch gekennzeichnet ist, dass** die Aktualisierung (500) für mindestens eine Navigationsvariable des Trägers, die in dem verbreiteten Zustand enthalten ist, folgende Unterschritte umfasst:

   • Berechnen (503) eines linearen Korrekturterms ausgehend von einer repräsentativen Innovation einer Abweichung zwischen den durch den Navigationssensor (12) erfassten Messungen und dem verbreiteten Zustand,
   • Berechnen einer Exponentiellen der linearen Korrektur im Sinne einer Lie-Gruppe,
   • Berechnen (504) eines ersten Korrekturterms, ausgedrückt in einem im Verhältnis zum Träger feststehenden Bezugspunkt (Rp), wobei der erste Korrekturterm von der Exponentiellen abhängig ist,
   • Berechnen (505) eines zweiten Korrekturterms, ausgedrückt in einem Trägheitsbezugspunkt (Ri), bei dem der Träger mobil ist, durch eine Änderung eines auf den ersten Korrekturterm angewandten Bezugspunkts,
   • Hinzufügen (506) des zweiten Korrekturterms zum Wert der Variablen, die in dem verbreiteten Zustand enthalten ist, wobei der Zustand, der das Ergebnis dieses Hinzufügens enthält, als Ausgangszustand der Iteration verwendet wird.

2. Verfahren nach dem vorstehenden Anspruch, wobei die lineare Korrektur gleich der Innovation multipliziert mit einer Kalman-Verstärkung ist.

3. Verfahren nach einem der vorstehenden Ansprüche, wobei das Berechnen (505) des zweiten Korrekturterms eine Multiplikation einer Rotationsmatrix mit dem ersten Korrekturterm umfasst.

4. Verfahren nach einem der vorstehenden Ansprüche, umfassend eine Anpassung mindestens eines der Korrekturtermini vor dessen Verwendung durch den Filter, anhand einer Alterungsumwandlung des Korrekturterms während der Dauer einer Iteration des erweiterten Kalman-Filters.

5. Verfahren nach dem vorstehenden Anspruch, wobei die Anpassung des Korrekturterms folgende Unterschritte umfasst:

   • zusätzliche Korrektur des Korrekturterms laut einer gespeicherten Abweichung, die einen kumulierten Annäherungsfehler bei der Anwendung einer Alterungsumwandlung mindestens einer vorherigen Iteration des Filters repräsentiert,
   • Anwenden der Alterungsumwandlung auf den versetzten Korrekturterm.

6. Verfahren nach einem der Ansprüche 4 und 5, wobei die Anpassung des ersten Korrekturterms anhand einer Umwandlung angewandt wird, die eine Basisänderung des ersten Korrekturterms umfasst, wobei die Destinationsbasis durch die Aktion einer Gruppe unveränderlich ist.

7. Verfahren nach einem der Ansprüche 4 bis 6, wobei die Anpassung eine Umwandlung des linearen Korrekturterms $\epsilon$ der folgenden Form umfasst:

$$\epsilon \rightarrow \Phi\epsilon$$

wo $\Phi$ eine Matrix ist, bei der mindestens ein Block durch die Formel $Ad(X_{t+\Delta t})^{-1}\tilde{F}Ad(X_t)$ berechnet wird, wobei $Ad(.)$ eine hinzugefügte Matrix im Sinne der Theorie der Lie-Gruppe ist, $\tilde{F}$ eine Verbreitungsmatrix ist, und $\Delta t$ eine Iterationsdauer des erweiterten Kalman-Filters ist.

**8.** Verfahren nach dem vorstehenden Anspruch, wobei $\tilde{F}$ eine der folgenden Formeln aufweist:

$$\tilde{F} = \begin{pmatrix} I_3 & 0_{3,3} & 0_{3,3} \\ \int g & I_3 & 0_{3,3} \\ \int\int g & \Delta T.I_3 & I_3 \end{pmatrix}; \quad \text{oder}$$

$$\tilde{F} = \begin{pmatrix} I_3 & 0_{3,3} \\ \int g & I_3 \end{pmatrix}; \quad \text{oder}$$

- $\tilde{F} = I_6$;

wobei:

- $\int g$ das Integral eines Schwerkraftvektors bezeichnet, das in einer geschätzten Position des Trägers zwischen den Zeitpunkten $t$ und $t + \Delta t$ berechnet wird;
- $\int\int g$ das doppelte Integral des Schwerkraftvektors bezeichnet, das in einer geschätzten Position des Trägers zwischen den Zeitpunkten t und t+$\Delta$t berechnet wird;
- $I_3$ einen Identitätsblock der Ordnung 3 bezeichnet,
- $0_{3,3}$ einen Quadratblock der Ordnung 3 bezeichnet, bei dem die Termini null sind.

**9.** Verfahren nach einem der vorstehenden Ansprüche, wobei die Verbreitung eine Riccati-Gleichung der folgenden Form anwendet:

$$P_{t+\Delta T} = \Phi P_t \Phi^T + \Delta T.Q$$

wo $\Phi$ eine Matrix ist, bei der mindestens einer der Blöcke durch die Formel $Ad(\hat{X}_{t+\Delta t})^{-1}\tilde{F}Ad(\hat{X}_t)$ berechnet wird, wobei $Ad(.)$ eine hinzugefügte Matrix im Sinne der Theorie der Lie-Gruppe ist, $\tilde{F}$ eine Verbreitungsmatrix ist, und $\Delta t$ eine Iterationsdauer des erweiterten Kalman-Filters ist.

**10.** Verfahren nach einem der vorstehenden Ansprüche,

- dessen Schritte durch eine Vielzahl von Kalman-Filtern angewandt werden, die mit unterschiedlichen Ursprungsbedingungen konfiguriert sind, und parallel funktionieren, um eine Vielzahl von Kandidatenschätzungen des Navigationszustands des Trägers zu erzeugen,
- weiter das Erzeugen einer konsolidierten Schätzung des Navigationszustands des Trägers ausgehend von einer Vielzahl von Kandidatenschätzungen umfassend, wobei die konsolidierte Schätzung von einem Vergleich zwischen jeder Kandidatenschätzung und den durch den Navigationssensor (12) erfassten Messungen abhängig ist.

**11.** Verfahren nach einem der vorstehenden Ansprüche, wobei mindestens ein Navigationssensor (12) ein Empfänger von Navigationssignalen ist, die von Satelliten ausgegeben werden.

**12.** Computerprogrammprodukt, Programmcodebefehle zur Ausführung der Schritte des Verfahrens nach einem der vorstehenden Ansprüche umfassend, wenn dieses Programm durch einen Computer ausgeführt wird.

**13.** Vorrichtung (2) zur Verfolgung der Navigation eines mobilen Trägers, umfassend:

- eine Schnittstelle (21) zum Empfangen von durch mindestens einen Trägheitssensor (11) erfassten Messungen,
- eine Schnittstelle (22) zum Empfangen von durch mindestens einen Navigationssensor (12) erfassten sekundären Messungen,
- mindestens einen Prozessor (20), konfiguriert, um einen erweiterten Kalman-Filter im Laufe von aufeinanderfolgenden Iterationen zum Einschätzen eines Navigationszustands des Trägers anzuwenden, wobei eine Iteration des Filters folgende Schritte umfasst:

  ∘ Verbreiten eines vorherigen Navigationszustands in einen verbreiteten Zustand in Abhängigkeit von einem kinematischen Modell und/oder von den erfassten primären Messungen,

∘ Aktualisieren des verbreiteten Zustands in Abhängigkeit von den Navigationsmessungen,
wobei die Vorrichtung (2) **dadurch gekennzeichnet ist, dass** der Prozessor (20) weiter konfiguriert ist, um mindestens eine Navigationsvariable des verbreiteten Zustands zu aktualisieren, mit folgenden Unterschritten:

• Berechnen (503) eines linearen Korrekturterms ausgehend von einer repräsentativen Innovation für eine Abweichung zwischen den durch den Navigationssensor (12) erfassten Messungen und dem verbreiteten Zustand,
• Berechnen einer Exponentiellen der linearen Korrektur im Sinne einer Lie-Gruppe,
• Berechnen eines ersten Korrekturterms, ausgedrückt in einem im Verhältnis zum Träger feststehenden Bezugspunkt, wobei der erste Korrekturterm von der Exponentiellen abhängig ist,
• Berechnen eines zweiten Korrekturterms, ausgedrückt in einem Trägheitsbezugspunkt, bei dem der Träger mobil ist, durch eine Änderung eines auf den ersten Korrekturterm angewandten Bezugspunkts,
• Hinzufügen des zweiten Korrekturterms zum Wert der Variablen in dem verbreiteten Zustand, wobei der Zustand, der das Ergebnis dieses Hinzufügens enthält, als Ausgangszustand der Iteration verwendet wird.

**14.** Navigationszentrale (1) für einen mobilen Träger, umfassend:

• mindestens einen Trägheitssensor (11),
• mindestens einen Navigationssensor (12), und
• mindestens eine Vorrichtung (10) zur Verfolgung der Navigation nach dem vorstehenden Anspruch.

**15.** Navigationszentrale (1) nach dem vorstehenden Anspruch, wobei mindestens ein Navigationssensor (12) ein Empfänger von Funknavigationssignalen ist, die von Satelliten ausgegeben werden.

**Claims**

**1.** A method for tracking a mobile carrier device, wherein an extended Kalman filter (EKF) estimates during successive iterations a navigation state of the carrier device, an iteration of the filter (EKF) comprising the steps of:

• propagating (300) a preceding navigation state of the carrier device into a propagated state according to a kinematic model and/or to measurements acquired by at least one inertial sensor (11),
• updating (500) the propagated state according to measurements acquired by at least one navigation sensor (12),

the method being **characterized in that**, for at least one navigation variable of the carrier device contained in the propagated state, the updating (500) comprises sub-steps of:

• calculating (503) a linear correction term from an innovation representative of a deviation between the measurements acquired by the navigation sensor (12) and the propagated state,
• calculating an exponential of the linear correction in the sense of a Lie group,
• calculating (504) a first corrective term expressed in a fixed reference system (Rp) relatively to the carrier device, the first corrective term depending on said exponential,
• calculating (505) a second corrective term expressed in an inertial reference system (Ri) wherein the carrier device is mobile, by a reference system change applied to the first corrective term,
• adding (506) the second corrective term to the value of the variable contained in the propagated state, the state containing the result of this addition being used as an output state of the iteration.

**2.** The method according to the preceding claim, wherein the linear correction is equal to the innovation multiplied by a Kalman gain.

**3.** The method according to one of the preceding claims, wherein calculating (505) the second corrective term comprises multiplying a rotation matrix with the first corrective term.

**4.** The method according to one of the preceding claims, comprising adjusting at least one of the corrective terms, before its use by the filter, by means of an ageing transformation of said corrective term during the duration of an iteration of the extended Kalman filter.

5. The method according to the preceding claim, wherein adjusting the corrective term comprises sub-steps of:

> • applying an additional correction of the corrective term according to a deviation stored in memory representing an accumulated approximation error in the application of an ageing transformation of at least one preceding iteration of the filter,
> • applying the ageing transformation to the shifted corrective term.

6. The method according to one of claims 4 and 5, wherein the adjustment of the first corrective term is applied by means of a transformation comprising a basis change of the first corrective term, the destination basis being invariant under the action of a group.

7. The method according to one of claims 4 to 6, wherein the adjustment comprises a transformation of the linear corrective term $\varepsilon$ of the following form:

$$\epsilon \to \Phi\epsilon$$

wherein $\Phi$ is a matrix for which at least one block is calculated by the formula $Ad(X_{t+\Delta t})^{-1}\tilde{F}Ad(X_t)$, wherein $Ad(.)$ is an adjoint matrix in the sense of the Lie group theory, $\tilde{F}$ is a propagation matrix, and $\Delta t$ a period of iteration of the extended Kalman filter.

8. The method according to the preceding claim, wherein $\tilde{F}$ has one of the following forms:

$$\tilde{F} = \begin{pmatrix} I_3 & 0_{3,3} & 0_{3,3} \\ \int g & I_3 & 0_{3,3} \\ \int\int g & \Delta T.I_3 & I_3 \end{pmatrix} ; \quad \text{or}$$

$$\tilde{F} = \begin{pmatrix} I_3 & 0_{3,3} \\ \int g & I_3 \end{pmatrix}; \quad \text{or}$$

• $\tilde{F} = I_6$ ;

wherein:

> • $\int g$ designates the integral of the gravity vector calculated in an estimated position of the carrier device between the instants $t$ and $t + \Delta t$;
> • $\int\int g$ designates the double integral of the gravity vector calculated in an estimated position of the carrier device between the instants $t$ and $t + \Delta t$;
> • $I_3$ designates an identity block of order 3,
> • $0_{3,3}$ designates a square block of order 3 for which all terms are zero.

9. The method according to one of the preceding claims, wherein the propagation applies a Riccati equation of the following form:

$$P_{t+\Delta T} = \Phi P_t \Phi^T + \Delta T.Q$$

wherein $\Phi$ is a matrix for which at least one of the blocks is calculated by the formula $Ad(\hat{X}_{t+\Delta t})^{-1}\tilde{F}Ad(\hat{X}_t)$, wherein $Ad(.)$ is an adjoint matrix in the sense of the Lie group theory, $\tilde{F}$ is a propagation matrix, and $\Delta t$ is a period of iteration of the extended Kalman filter.

10. The method according to one of the preceding claims,

> • for which the steps are applied by a plurality of Kalman filters configured with different initial conditions, and operating in parallel so as to produce a plurality of candidate estimations of the navigation state of the carrier device,
> • further comprising producing a consolidated estimation of the navigation state of the carrier device from the plurality of candidate estimations, the consolidated estimation depending on a comparison between each candidate estimation and the measurements acquired by the navigation sensor (12).

11. The method according to one of the preceding claims, wherein at least one navigation sensor (12) is a receptor for receiving radio navigation signals emitted by satellites.

12. A computer program product comprising program code instructions for executing steps of the method according to one of the preceding claims, when this program is executed by a computer.

13. A device (2) for tracking a mobile carrier device comprising:

• an interface (21) for receiving measurements acquired by at least one inertial sensor (11),
• an interface (22) for receiving secondary measurements acquired by at least one navigation sensor (12),
• at least one processor (20) configured for applying an extended Kalman filter during successive iterations for estimating a navigation state of the carrier device, an iteration of the filter comprising steps of:

∘ propagating a preceding navigation state into a propagated state depending on a kinematic model and/or primary measurements,
∘ updating the propagated state according to navigation measurements,

the device (2) being **characterized in that** the processor (20) is further configured for updating at least one navigation variable of the propagated state, wherein said updating comprises sub-steps of:

• calculating (503) a linear correction term from an innovation representative of a deviation between the measurements acquired by the navigation sensor (12) and the propagated state,
• calculating an exponential of the linear correction in the sense of a Lie group,
• calculating a first corrective term expressed in a fixed reference system relatively to the carrier device, the first corrective term depending on said exponential,
• calculating a second corrective term expressed in an inertial reference system wherein the carrier device is mobile, by a reference system change applied to the first corrective term,
• adding the second corrective term to the value of the variable in the propagated state, the state containing the result of this addition being used as an output state of the iteration.

14. A navigation central unit (1) for a mobile carrier device, comprising:

• at least one inertial sensor (11),
• at least one navigation sensor (12), and
• at least one device (10) for tracking navigation according to the preceding claim.

15. The navigation central unit (1) according to the preceding claim, wherein at least one navigation sensor (12) is a receptor for receiving radio navigation signals emitted by satellites.

A

Ri

Rp

FIG. 1

FIG. 2

1

2

S

11

21

20

23

12

22

FIG.3

FIG.4

200

Mesures primaires

t

Mise à jour

500

Mesure
secondaire i

Mesure
secondaire i+1

400

400

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1801539 A

- FR 1401512

**Littérature non-brevet citée dans la description**

- **A. BARRAU ; S. BONNABEL.** *The invariant extended Kalman filter as a stable observer,* 1410-1465